# EUROPEAN PATENT APPLICATION

(11) **EP 4 460 082 A1**
(43) Date of publication of application: **06.11.2024**
(21) Application number: 22914488.6
(22) Date of filing: 22.12.2022
(51) Int. Cl.: H04W 36/00

(54) **CELL SELECTION OR RESELECTION METHOD AND APPARATUS, TERMINAL, AND READABLE STORAGE MEDIUM**

(30) Priority: 28.12.2021 CN 202111627127
(71) Applicant: VIVO MOBILE COMMUNICATION CO., LTD., Dongguan, Guangdong 523863 (CN)
(72) Inventor: CHEN, Li, Dongguan, Guangdong 523863 (CN); PAN, Xueming, Dongguan, Guangdong 523863 (CN); WANG, Lihui, Dongguan, Guangdong 523863 (CN)
(74) Representative: Conti, Marco
(86) International application number: PCT/CN2022/141049
(87) International publication number: WO 2023/125234

(57) **Abstract**

This application belongs to the field of communications technologies, and discloses a cell selection or reselection method and apparatus, a terminal, and a readable storage medium. The cell selection or reselection method in embodiments of this application includes: obtaining, by the terminal, measurement performance of a first object; and performing a cell selection or reselection operation based on the measurement performance of the first object, where the first object includes any one of the following: an NCD-SSB of a second BWP; and the NCD-SSB of the second BWP and a cell defining synchronization signal and PBCH block CD-SSB of a first BWP; and the first BWP is a BWP including the CD-SSB, and the second BWP is a BWP including the NCD-SSB.

## Description

### CROSS-REFERENCE TO RELATED APPLICATIONS

This application claims priority to Chinese Patent Application No. 202111627127.2, filed on December 28, 2021 in China, which is incorporated herein by reference in its entirety.

### TECHNICAL FIELD

This application relates to the field of communications technologies, and specifically, to a cell selection or reselection method and apparatus, a terminal, and a readable storage medium.

### BACKGROUND

In a conventional technology, a terminal usually performs cell selection or reselection based on measurement performance of a cell defining synchronization signal and PBCH block (Cell Defining Synchronization Signal and PBCH block, CD-SSB). In this case, when a non-cell defining synchronization signal and PBCH block (Non-Cell Defining Synchronization Signal and PBCH block, NCD-SSB) is configured on a system, if the terminal performs all or some of operations on the NCD-SBB, for example, reception of system information (System Information, SI) and reception of a paging (Paging) message, the terminal needs to frequently perform radio frequency retuning for cell selection or reselection. Consequently, power consumption of the terminal is increased.

### SUMMARY

Embodiments of this application provide a cell selection or reselection method and apparatus, a terminal, and a readable storage medium, so that a problem that power consumption of a terminal is increased due to a current cell selection or reselection method when an NCD-SSB is configured.

According to a first aspect, a cell selection or reselection method is provided, applied to a terminal, where the method includes:
obtaining, by a terminal, measurement performance of a first object; and
performing, by the terminal, a cell selection or reselection operation based on the measurement performance of the first object, where
the first object includes any one of the following: an NCD-SSB of a second BWP; and the NCD-SSB of the second BWP and a CD-SSB of a first BWP; and
the first BWP is a BWP including the CD-SSB, and the second BWP is a BWP including the NCD-SSB.

According to a second aspect, a cell selection or reselection apparatus is provided, applied to a terminal, and including:
an obtaining module, configured to obtain measurement performance of a first object; and
an execution module, configured to perform a cell selection or reselection operation based on the measurement performance of the first object, where
the first object includes any one of the following: an NCD-SSB of a second BWP; and the NCD-SSB of the second BWP and a CD-SSB of a first BWP; and
the first BWP is a BWP including the CD-SSB, and the second BWP is a BWP including the NCD-SSB.

According to a third aspect, a terminal is provided, where the terminal includes a processor and a memory, the memory stores a program or an instruction executable by the processor, and when the program or the instruction is executed by the processor, the steps of the method according to the first aspect is implemented.

According to a fourth aspect, a terminal is provided, including a processor and a communication interface, where the processor is configured to: obtain measurement performance of a first object; and perform a cell selection or reselection operation based on the measurement performance of the first object, where the first object includes any one of the following: an NCD-SSB of a second BWP; and the NCD-SSB of the second BWP and a CD-SSB of a first BWP; and the first BWP is a BWP including the CD-SSB, and the second BWP is a BWP including the NCD-SSB.

According to a fifth aspect, a communication system is provided, including a terminal and a network side device, where the terminal may be configured to perform the steps of the cell selection or reselection method according to the first aspect, and the network side device may be configured to send relevant configuration information of an NCD-SSB of a second BWP to the terminal, so that the terminal performs corresponding measurement.

According to a sixth aspect, a readable storage medium is provided, where the readable storage medium stores a program or an instruction, and the program or the instruction is executed by a processor to implement the steps of the method according to the fifth aspect.

According to a seventh aspect, a chip is provided, where the chip includes a processor and a communication interface, the communication interface is coupled to the processor, and the processor is configured to run a program or an instruction to implement the steps of the method according to the first aspect.

According to an eighth aspect, a computer program product is provided, where the computer program product is stored in a storage medium, and the computer program product is executed by at least one processor to implement the steps of the method according to the first aspect.

According to a ninth aspect, a communication device is provided, and configured to perform the steps of the method according to the first aspect.

In the embodiments of this application, the terminal may obtain the measurement performance of the first object; and perform the cell selection or reselection operation based on the measurement performance of the first object, where the first object includes any one of the following: the NCD-SSB of the second BWP; and the NCD-SSB of the second BWP and the CD-SSB of the first BWP. Therefore, when the NCD-SSB is configured, the cell selection or reselection operation may be performed with reference to the measurement performance of the NCD-SSB, to prevent the terminal from frequently performing radio frequency retuning, so that power consumption of the terminal is reduced, a service interruption probability is reduced, system performance is improved, and the like.

### BRIEF DESCRIPTION OF DRAWINGS

FIG. 1 is a block diagram of a wireless communication system to which embodiments of this application are applicable;
FIG. 2A, FIG. 2B, FIG. 2C, and FIG. 2D are schematic diagrams of a location of a CD-SSB and a location of an NCD-SSB according to an embodiment of this application;
FIG. 3 is a flowchart of a cell selection or reselection method according to an embodiment of this application;
FIG. 4 is a schematic diagram of a structure of a cell selection or reselection apparatus according to an embodiment of this application;
FIG. 5 is a schematic diagram of a structure of a terminal according to an embodiment of this application; and
FIG. 6 is a schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the descriptions and the claims, "and/or" represents at least one of connected objects, and a character "/" generally represents an "or" relationship between associated objects.

It should be noted that technologies described in the embodiments of this application are not limited to a long time evolution (Long Time Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to applications other than the NR system application, such as the 6^{th} generation (6^{th} Generation, 6G) communication system.

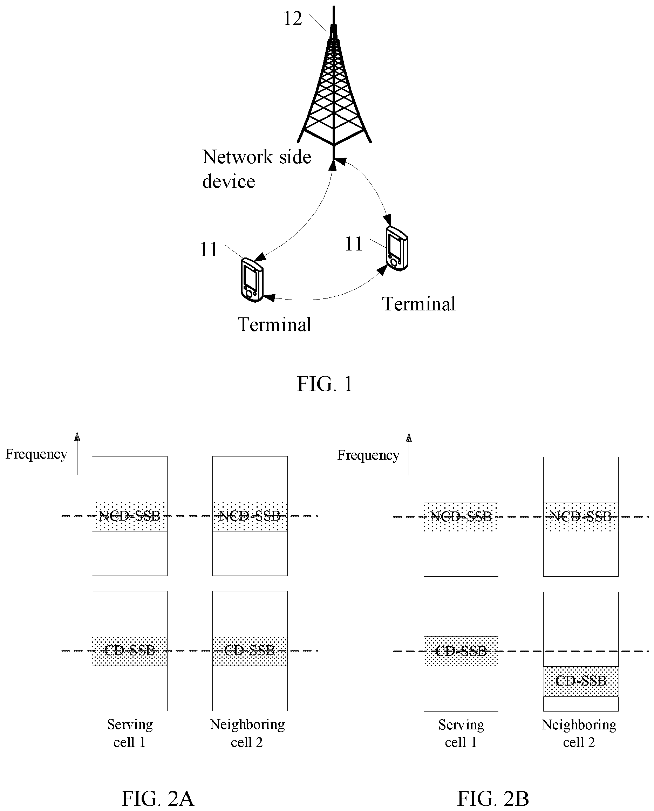

FIG. 1 is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer), or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bracelet, a smart hand chain, a smart ring, a smart necklace, a smart anklet, a smart ankle chain, and the like), a smart wristband, smart clothes, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In a communication system, for example, the NR system, the terminal may perform one or more of the following operations on an initial downlink bandwidth part (Bandwidth Part, BWP) of a cell, in other words, an initial DL BWP (also referred to as a first downlink BWP in this specification): reception of a synchronization signal and PBCH block, a random access process, downlink reception, reception of system information (System Information, SI), and reception of paging information, and the like. Uplink transmission of the random access process is performed on a corresponding initial uplink BWP, in other words, an initial UL BWP. The terminal may perform radio resource management (Radio Resource Management, RRM) measurement and cell reselection determining based on a cell defining synchronization signal and PBCH block (Cell Defining Synchronization Signal and PBCH block, cell defining SSB, CD-SSB) on the initial downlink BWP. The CD-SSB is also referred to as a first SSB in this specification.

For some terminals, for example, some types of terminals, such as RedCap UE with a limited function, configuration of a separate initial DL BWP (also referred to as a second downlink BWP in this specification) may be supported. The terminal may perform the foregoing sending and receiving behavior on the separate initial DL BWP. The separate initial DL BWP and the foregoing first downlink BWP may be completely staggered in a frequency domain, or partially overlap, or have an inclusion relationship. Because the terminal needs to obtain downlink synchronization, measurement, automatic gain control (Automatic Gain Control, AGC), and other operations based on the synchronization signal and PBCH block (Synchronization Signal and PBCH block, SSB), if the separate initial DL BWP does not include the SSB, it may be caused that the terminal needs to frequently perform radio frequency retuning (Radio Frequency retuning, RF retuning), that is, the terminal frequently needs to return from the separate initial DL BWP to a bandwidth of the first downlink BWP to receive the SSB. In this case, power consumption of the terminal is increased, a service interruption probability is increased, system performance deteriorates, and the like. Therefore, including an SSB (also referred to as a second SSB in this specification) in the separate initial DL BWP may reduce power consumption of the terminal for sending and receiving on the BWP. The SSB is usually a non-cell defining synchronization signal and PBCH block NCD-SSB, that is, the SSB does not include a system information receiving configuration indication.

Optionally, the terminal may determine a location and a frequency of the second SSB on the second downlink BWP based on system information or higher-layer signaling on the first downlink BWP, and is configured to perform RRM measurement at the frequency of the second SSB. The measurement may be intra-frequency (intra-frequency) measurement, including measurement of a serving cell and measurement of an intra-frequency neighboring cell. Based on a measurement result, it may be determined whether to enable neighboring cell measurement or whether to reselect a neighboring cell at the frequency.

Optionally, before performing intra-frequency measurement and inter-frequency measurement, the terminal first measures the serving cell. When a measurement result of the serving cell is greater than a preset threshold, the terminal may not perform the intra-frequency or inter-frequency measurement. The measurement result may include reference signal received power (Reference Signal Received Power, RSRP), reference signal received quality (Reference Signal Received Quality, RSRQ), and/or the like.

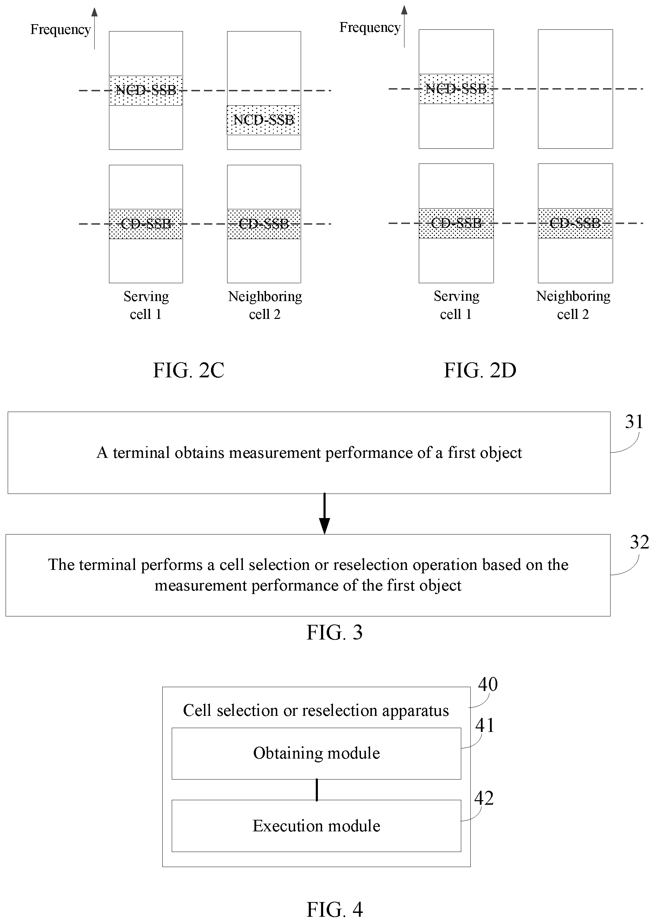

In this embodiment of this application, as shown in FIG. 2A to FIG. 2D, a location of a CD-SSB and a location of an NCD-SSB are flexibly deployed on a network. A neighboring cell is not necessarily deployed at a frequency of the CD-SSB or a frequency of the NCD-SSB. In FIG. 2A to FIG. 2D, two cells are, for example, a serving cell (serving cell) 1 and a neighboring cell (neighbor cell) 2. The NCD-SSB corresponds to a separate initial BWP (separate initial BWP), and the CD-SSB corresponds to a legacy initial BWP (legacy initial BWP). As shown in FIG. 2A, frequency locations of the CD-SSB and the NCD-SSB in the two cells are the same. As shown in FIG. 2B, frequency locations of the NCD-SSB in the two cells are the same, but frequency locations of the CD-SSB are different. As shown in FIG. 2C to FIG. 2D, frequency locations of the CD-SSB in the two cells are the same, but frequency locations of the NCD-SSB are different, or there is no NCD-SSB in the neighboring cell.

Optionally, physical cell identifiers (Physical Cell Identifier, PCI) of SSBs at different frequency locations in a same cell/carrier deployed on the network may be the same or different, allowing relatively great flexibility during network deployment. A PCI is carried by using a synchronization signal in an SSB. However, if PCIs of two SSBs with different frequencies are different, as shown in FIG. 2A, even if the terminal learns a frequency location of a CD-SSB of a neighboring cell, without an additional information indication, the terminal still cannot learn a PCI of a first SSB associated with a second SSB with relatively good measured signal quality. That is, the terminal does not learn a PCI of a reselection target cell, which will also cause the terminal to be unable to quickly reselect and/or camp on a target cell.

In a communication system, for example, an NR system, the CD-SSB may be deployed to some preset frequencies, and the terminal searches for the synchronization signal and PBCH block SSB at the frequencies. The NCD-SSB may be deployed at a frequency corresponding to a synchronization signal raster sync raster for sending, or may be deployed at a frequency corresponding to a non-sync raster for sending. When the NCD-SSB is sent on the sync raster, information on a physical broadcast channel (Physical Broadcast Channel, PBCH) may indicate at least one of the following: There is no CD-SSB within a preset frequency range; or a frequency of a closest CD-SSB.

For selection of an initial cell, the terminal may scan (scan) all radio frequency channels RF channels one by one based on a capability of the terminal, to find a suitable (suitable) cell. On each scanning carrier, the terminal needs to search for only a cell with strongest signal quality. Once a suitable cell is found, the cell is selected for camping and an initial cell selection process is stopped, that is, an RF channel that has not been scanned does not need to be scanned again. The so-called suitable cell meets at least all the following conditions:
signal quality of the cell meets a preset condition, and the signal quality includes an RSRP and/or RSRQ;
the terminal may obtain necessary system information, where the system information includes at least a MIB and a SIB 1; and
a cell bar information element (cell bar Information element, cell bar IE)(whose value may be barred (barred) or not barred (not Barred)) in the system information is set to being not barred, that is, the cell is not barred from attachment or access.

For cell reselection, the terminal may evaluate, in a frequency priority order provided by the network, whether there is a suitable reselection target cell at each frequency, starting from a frequency with a high priority one by one. Only the suitable cell may be used as the reselection target cell. Different frequencies may be configured with same or different frequency priorities. When the terminal camps on the serving cell, if a cell at an NR or LTE frequency with a higher priority meets cell signal quality Squal > a threshold value Threshx, HighQ within a period of time Treselection_{RAT}, or if a cell at an NR frequency or another radio access technology (Radio Access Technology, RAT) frequency with a higher priority meets signal strength Srxlev > a threshold value Thresh_{X, HighP} within a period of time Treselection_{RAT} and the terminal has camped on the current serving cell for more than one second, a reselection process is initiated to a cell at an NR frequency or another RAT frequency with a higher priority.

For an S-measure (S-measure) condition, at least the following content is met:
(1) When it is determined whether to measure an intra-frequency (intra-frequency) neighboring cell for a purpose of cell selection or reselection, when the serving cell meets Srxlev > SIntraSearchP and Squal > SIntraSearchQ, the terminal does not measure the intra-frequency neighboring cell; or otherwise, if Srxlev and/or Squal are/is less than the threshold values, the intra-frequency neighboring cell needs to be measured.
(2) For inter-frequency (inter-frequency) and inter-system (Inter-RAT) scenarios, when a priority is greater than a current service frequency and a radio access type (Radio Access Type, RAT), the terminal may measure the neighboring cell based on a measurement requirement defined in a protocol. When the priority is equal to or less than the current service frequency and the RAT, if the serving cell meets Srxlev > SnonIntraSearchP and Squal > SnonIntraSearchQ, the terminal may choose not to measure the neighboring cell; or otherwise, if Srxlev and Squal are less than the threshold values, the neighboring cell needs to be measured.

The foregoing measurement threshold values of the neighboring cell are optionally configured by the network side device. When the measurement threshold values are not configured, measurement threshold values defined in the protocol may be used. When a measurement result of a current cell does not meet a criterion S for a plurality of consecutive times, measurement of the neighboring cell is triggered.

Optionally, in this embodiment of this application, the current cell indicates a cell in which the terminal is located.

Optionally, in this embodiment of this application, the neighboring cell may include any one of the following: an intra-frequency neighboring cell, an inter-frequency neighboring cell, or an inter-system neighboring cell.

With reference to the accompanying drawings, the following describes in detail a cell selection or reselection method and apparatus, a terminal, and a readable storage medium provided in the embodiments of this application by using some embodiments and application scenarios thereof.

FIG. 3 is a flowchart of a cell selection or reselection method according to an embodiment of this application. The method is executed by a terminal. As shown in FIG. 3, the method includes the following steps.

Step 31: The terminal obtains measurement performance of a first object.

In this embodiment, the first object may include any one of the following: an NCD-SSB of a second BWP; and the NCD-SSB of the second BWP and a CD-SSB of a first BWP. That is, the first object may be the NCD-SSB of the second BWP, or may be the NCD-SSB of the second BWP and the CD-SSB of the first BWP. The first BWP is a BWP including the CD-SSB, and the second BWP is a BWP including the NCD-SSB. The second BWP is different from the first BWP.

In some embodiments, the first BWP is an initial BWP (initial BWP). For example, an initial BWP configured for common UE may include the CD-SSB. The second BWP is a separate initial BWP (separate initial BWP). For example, a separate initial BWP configured for RedCap UE may include the NCD-SSB.

In some embodiments, the NCD-SSB of the second BWP may include an NCD-SSB of a second BWP of a current cell and/or a neighboring cell.

In some embodiments, the CD-SSB of the first BWP may include a CD-SSB of a first BWP of the current cell and/or the neighboring cell.

Optionally, a physical broadcast channel (Physical Broadcast Channel, PBCH) corresponding to the CD-SSB includes relevant configuration information indicating reception of system information, and/or a transmission frequency location of the CD-SSB is at a frequency location corresponding to a synchronization signal raster sync raster. A PBCH corresponding to the NCD-SSB does not include relevant configuration information indicating reception of the system information, and/or a transmission frequency location of the NCD-SSB is not at a frequency location corresponding to a sync raster.

Step 32: The terminal performs a cell selection or reselection operation based on the measurement performance of the first object.

Optionally, a rule used by the terminal when performing the cell selection or reselection operation based on the measurement performance of the first object may be related to a criterion R of cell reselection, or may be related to a criterion R of cell selection and reselection. This is not limited.

It should be noted that the measurement performance in this embodiment of this application may be understood as a measurement result, and may include but not limited to at least one of the following: a reference signal received power (Reference Signal Received Power, RSRP), reference signal received quality (Reference Signal Received Quality, RSRQ), a signal to interference plus noise ratio (Signal to Interference plus Noise Ratio, SINR), a received signal strength indication (Received Signal Strength Indication, RSSI), or the like.

In the cell selection or reselection method in this embodiment of this application, the terminal may obtain the measurement performance of the first object; and perform the cell selection or reselection operation based on the measurement performance of the first object, where the first object includes any one of the following: the NCD-SSB of the second BWP; and the NCD-S SB of the second BWP and the CD-SSB of the first BWP. Therefore, when the NCD-SSB is configured, the cell selection or reselection operation may be performed with reference to the measurement performance of the NCD-SSB, to prevent the terminal from frequently performing radio frequency retuning (RF retuning), so that power consumption of the terminal is reduced, a service interruption probability is reduced, system performance is improved, and the like.

Optionally, in this embodiment of this application, the first BWP may include any one of the following: an uplink BWP; a downlink BWP; and the uplink and downlink BWPs (in other words, the uplink BWP and the downlink BWP); and/or, the second BWP may include any one of the following: an uplink BWP; a downlink BWP; and the uplink and downlink BWPs (in other words, the uplink BWP and the downlink BWP).

Optionally, to obtain the measurement performance of the first object, the terminal may receive relevant configuration information of the NCD-SSB of the second BWP from the network side device. The relevant configuration information of the NCD-SSB of the second BWP may include relevant configuration information of the NCD-SSB of the second BWP of the current cell and/or the neighboring cell. The relevant configuration information of the NCD-SSB of the second BWP may include at least one of the following:
(1) transmit power information of the NCD-SSB, where for example, the transmit power information may include: a transmit power of the NCD-S SB and/or a difference between the transmit power of the NCD-SSB and a transmit power of the CD-SSB;
(2) time domain information of the NCD-SSB, where for example, the time domain information may include: a time domain location of the NCD-S SB, and/or time synchronization information of the NCD-SSB and the CD-SSB;
(3) frequency domain information of the NCD-SSB, where for example, the frequency domain information may include: a frequency domain location of the NCD-SSB, and/or a difference between the frequency domain location of the NCD-SSB and a frequency domain location of the CD-SSB;
(4) a quasi co-location (Quasi Co-Location, QCL) relationship between the NCD-SSB and the CD-SSB; or
(5) an SSB measurement timing configuration (SSB Measurement Timing Configuration, SMTC) corresponding to the NCD-SSB.

Further, after receiving the relevant configuration information of the NCD-SSB of the second BWP, the terminal may perform measurement based on the relevant configuration information, to obtain the measurement performance of the first object.

Optionally, to meet a cell selection or reselection requirement, when receiving network indication information or meeting a first condition, the terminal may perform the cell selection or reselection operation based on the measurement performance of the first object.

Optionally, the network indication information may be used to indicate any one of the following:
performing the cell selection or reselection operation based on measurement performance of the NCD-SSB of the second BWP;
performing the cell selection or reselection operation based on the measurement performance of the NCD-SSB of the second BWP and measurement performance of the CD-SSB of the first BWP;
a criterion R for cell selection or reselection by the terminal based on the measurement performance of the NCD-SSB of the second BWP;
a criterion S for cell selection or reselection by the terminal based on the measurement performance of the NCD-SSB of the second BWP; and
meeting the first condition.

Optionally, the first condition may include at least one of the following:
the terminal performs at least one of the following on a second BWP of a current cell: receiving system information SI, receiving a paging message, monitoring an advance indication signal, performing random access, cell camping, or the like;
an NCD-SSB is configured in a current cell;
an NCD-SSB is configured in a neighboring cell;
a random access related configuration is configured on a second BWP of a current cell and/or a neighboring cell, for example, a network side device configures a random access related configuration on a second BWP of the current cell and/or the neighboring cell; or
an S-measure condition is met, where for example, meeting the S-measure condition may be: measurement performance of a current cell is greater than a preset threshold, where
cell measurement performance is determined based on the measurement performance of the NCD-SSB of the second BWP, the measurement performance of the NCD-SSB of the second BWP can represent cell measurement performance, or the measurement performance of the NCD-SSB of the second BWP can replace the measurement performance of the CD-SSB of the first BWP, where the cell measurement performance may include the measurement performance of the current cell and/or the neighboring cell, for example, an RSRP, RSRQ, an RSSI, and/or an SINR of the current cell and/or the neighboring cell.

In some embodiments, when meeting another condition, the terminal may further perform the cell selection or reselection operation based on the measurement performance of the first object. The another condition may include at least one of the following:
when receiving configuration information of a second BWP or an NCD-SSB of a first network side device, the terminal performs a predetermined operation on the second BWP, or is switched from a first BWP to the second BWP, where the first network side device is a network side device corresponding to the current cell; and in this case, some terminals or behavior of the terminal is switched to the second BWP, so that load balancing on a network side can be effectively performed, or impact on an existing terminal on the first BWP is reduced;
a bandwidth of a first BWP exceeds a bandwidth of the terminal, where the bandwidth of the terminal includes at least one of the following: a bandwidth supported by the terminal, a channel bandwidth of the terminal, or a BWP bandwidth supported by the terminal; the bandwidth of the first BWP includes at least one of the following: a bandwidth, a minimum bandwidth, or a maximum bandwidth configured by the first BWP, a system bandwidth configured by the first BWP, or a channel bandwidth configured by the first BWP; and in this case, a failure of the terminal to access the network can be avoided;
a carrier bandwidth, a channel bandwidth, or a system bandwidth exceeds a bandwidth of the terminal, where the bandwidth of the terminal includes at least one of the following: a bandwidth supported by the terminal, a channel bandwidth of the terminal, or a BWP bandwidth supported by the terminal; the carrier bandwidth, the channel bandwidth, or the system bandwidth is configured by the network side device or agreed upon in a protocol; and in this case, a failure of the terminal to access the network can be avoided;
a bandwidth of a second BWP is less than or equal to a bandwidth of the terminal, where the bandwidth of the terminal includes at least one of the following: a bandwidth supported by the terminal, a channel bandwidth of the terminal, or a BWP bandwidth supported by the terminal; the bandwidth of the second BWP includes at least one of the following: a bandwidth, a minimum bandwidth, or a maximum bandwidth configured by the second BWP, a system bandwidth configured by the second BWP, or a channel bandwidth configured by the second BWP; and in this case, some terminals or behavior of the terminal can be switched to the second BWP, so that load balancing on a network side can be effectively performed, or impact on an existing terminal on the first BWP is reduced;
measurement performance of a first BWP is less than or equal to a first preset threshold, and the first preset threshold may be configured by a network side device or agreed upon in a protocol; in this case, when quality of the first BWP is relatively poor, switching can be performed to the second BWP to perform a predetermined operation or to a second BWP, to ensure system performance; the measurement performance of the first BWP refers to measurement performance of a reference signal (for example, a CD-SSB) on the first BWP; and in this case, performance of corresponding behavior of the terminal on the second BWP can be effectively ensured, thereby preventing the measurement performance of the first BWP from being too poor to affect performance of the terminal;
measurement performance of a second BWP is greater than or equal to a second preset threshold, and the second preset threshold may be configured by a network side device or agreed upon in a protocol; in this case, when quality of the second BWP is relatively good, switching can be performed to the second BWP to perform a predetermined operation or to the second BWP, so that load balancing on a network side can be effectively performed, or impact on an existing terminal on a first BWP is reduced, to ensure system performance; and the measurement performance of the second BWP refers to measurement performance of a reference signal (for example, an NCD-SSB) on the second BWP;
measurement performance of the terminal in the current cell is greater than a third preset threshold, and the third preset threshold may be configured by a network side device or agreed upon in a protocol; in this case, when channel quality of the current cell is relatively good, switching can be performed to a second BWP to perform a predetermined operation or to the second BWP, and some terminals or behavior of the terminal is switched to the second BWP, so that load balancing on a network side can be effectively performed, or impact on an existing terminal on a first BWP is reduced, to ensure system performance;
measurement performance of the terminal in the neighboring cell is less than a fourth preset threshold, and the fourth preset threshold may be configured by a network side device or agreed upon in a protocol; in this case, when channel quality of the neighboring cell is relatively poor, switching can be performed to the second BWP to perform a predetermined operation or to the second BWP, to ensure system performance; and the neighboring cell includes at least one of the following: an intra-frequency neighboring cell, an inter-frequency neighboring cell, or an inter-system neighboring cell, that is, when the measurement performance of the neighboring cell is not good enough, some terminals or behavior of the terminal is switched to the second BWP, so that load balancing on a network side can be effectively performed, or impact on an existing terminal on the first BWP is reduced;
the terminal is in a center of a cell or is not on an edge of a cell; in this case, when the terminal is close to or located in the center of the cell, switching can be performed to the second BWP to perform a predetermined operation or to the second BWP; so that load balancing on a network side can be implemented, or impact on an existing terminal on a first BWP is reduced;
the terminal meets an S-measure condition, so that some terminals or behavior of the terminal is switched to a second BWP, so that load balancing on a network side can be effectively performed, or impact on an existing terminal on a first BWP is reduced;
the terminal does not enable measurement on the neighboring cell, and the neighboring cell includes at least one of the following: an intra-frequency neighboring cell, an inter-frequency neighboring cell, or an inter-system neighboring cell; and in this case, some terminals or behavior of the terminal is switched to a second BWP, so that load balancing on a network side can be effectively performed, or impact on an existing terminal on a first BWP is reduced;
a second network side device sends an NCD-SSB on the second BWP, and the second network side device is a network side device corresponding to the neighboring cell; the neighboring cell herein includes some and all of neighboring cells; and the terminal may receive the NCD-SSB sent by the second network side device, or receive a message indicating the second network side device to send the NCD-SSB on the second BWP;
the terminal performs cell selection or reselection; and in this case, some terminals or behavior of the terminal is switched to a second BWP, so that load balancing on a network side can be effectively performed, or impact on an existing terminal on a first BWP is reduced;
the terminal is in a low-mobility state or static state; and in this case, some terminals or behavior of the terminal is switched to a second BWP, so that load balancing on a network side can be effectively performed, or impact on an existing terminal on a first BWP is reduced;
a random number corresponding to the terminal falls within a preset range, that is, a preset proportion of terminals perform a predetermined operation on a second BWP or are switched from a first BWP to the second BWP, so that load balancing on a network side can be implemented; the preset range is a range determined based on a preset ratio; if the preset ratio is X% of the terminals, the corresponding terminal generates a random number from 0 to 1; if the random number is less than or equal to X%, the random number corresponding to the terminal belongs to the preset range; and if the random number generated by the terminal is greater than or equal to X%, the random number corresponding to the terminal does not belong to the preset range, that is, load control on the network side is implemented based on a ratio;
there is a specific reference signal on a second BWP; and the specific reference signal includes an NCD-SSB, for example, when the second BWP has a reference signal, such as an SSB, a channel state information resource indicator (Channel State Information Resource Indicator, CSI-RS), a sounding reference signal (Sounding Reference Signal, SRS), or a demodulation reference signal (Demodulation Reference Signal, DMRS), some terminals or behavior of the terminal is switched to the second BWP, so that load balancing on a network side can be effectively performed, or impact on an existing terminal on the first BWP is reduced; or
a first indication of a first network side device is received.

In some embodiments, the method further includes:
receiving a third indication of the first network side device, where the third indication is used to indicate the another condition; after receiving the third indication of the first network side device, the terminal performs a predetermined operation or is switched from the first BWP to the second BWP; the first network side device may issue the third indication based on system load, to indicate the terminal to perform the predetermined operation on the second BWP, thereby implementing load balancing; and in addition, the first network side device may further issue the third indication to a RedCap terminal, to avoid impact of a large quantity of RedCap terminals on a common terminal (the terminal that performs the predetermined operation on the first BWP).

In some embodiments, the first indication is used to indicate at least one of the following:
the terminal performs the predetermined operation on the second BWP or is switched from the first BWP to the second BWP;
the second BWP can be used to perform the predetermined operation on the second BWP or to perform switching from the first BWP to the second BWP;
load of the current cell or the first BWP is greater than a fifth preset threshold, and the fifth preset threshold may be configured by a network side device or agreed upon in a protocol, so that when the load of the first BWP or the current cell is relatively high, switching can be performed to the second BWP to perform a predetermined operation or to the second BWP, to implement load balancing; the current cell or the first BWP does not support the terminal type; in this case, to ensure that the terminal may access the current cell, switching is performed to the second BWP to perform the predetermined operation or to the second BWP, so that execution of the predetermined operation can be ensured; the terminal type may include a RedCap terminal, a terminal with a single receiving antenna, and a narrowband terminal; and the terminal performs cell selection or reselection based on the measurement performance of the NCD-SSB of the second BWP;
the terminal performs cell selection or reselection based on the measurement performance of the NCD-S SB of the second BWP and the measurement performance of the cell defining synchronization signal and PBCH block CD-SSB of the first BWP;
a criterion R for cell selection or reselection by the terminal based on the measurement performance of the NCD-SSB of the second BWP; or
a criterion S for cell selection or reselection by the terminal based on the measurement performance of the NCD-SSB of the second BWP, where
cell measurement performance of the current cell is determined based on the measurement performance of the NCD-S SB of the second BWP, the measurement performance of the NCD-SSB of the second BWP can represent cell measurement performance of the current cell, or the measurement performance of the NCD-SSB of the second BWP can replace the measurement performance of the CD-SSB of the first BWP.

It should be noted that the criterion R for cell reselection is to rank the measurement performance of the neighboring cell, or the measurement performance of the current cell and the measurement performance of the neighboring cell, and select a cell with optimum measurement performance as a target cell. Herein, the measurement performance of the NCD-SSB of the second BWP is used as measurement performance of a corresponding cell.

The criterion S for cell selection and reselection may include: Measurement performance of the target cell is greater than a preset threshold 1; or measurement performance of the target cell is greater than a preset threshold 1, and the measurement performance of the current cell is less than a preset threshold 2. The preset threshold 1 and the preset threshold 2 may be determined based on an actual requirement. Herein, the measurement performance of the NCD-S SB of the second BWP is used as the measurement performance of the corresponding cell.

In some embodiments, that the terminal is in a low-mobility state or static state includes at least one of the following:
a variation of the measurement performance of the terminal in the current cell is less than a sixth preset threshold or a first reference threshold, and the first reference threshold is a reference threshold of a serving cell;
a variation of beam measurement of the terminal in the current cell is less than a seventh preset threshold or a second reference threshold, and the second reference threshold is a reference threshold of a serving cell; or
a quantity of beams for which a variation of beam measurement of the terminal in the current cell is greater than a seventh preset threshold is less than an eighth preset threshold, where
the sixth preset threshold, the seventh preset threshold, and the eighth preset threshold may be configured by the network side device or agreed upon in a protocol.

In some embodiments, when the terminal is in a connected state, the first indication is sent by using a radio resource control (Radio Resource Control, RRC) message.

When the terminal is in an idle state or an inactive state, the first indication is sent by using at least one of the following messages: a broadcast system message, a paging message, a paging advance indication message, or a dedicated RRC message. The paging message includes downlink control information (downlink Control Information, DCI) corresponding to a physical downlink shared channel (Physical Downlink Shared Channel, PDSCH) and/or a physical downlink control channel (Physical Downlink Control Channel, PDCCH). The dedicated RRC message includes an RRC release (release) message, an RRC suspend (suspend) message, an RRC reject (reject) message, and the like.

In this way, by virtue of the foregoing conditions, a usage scenario in which the cell selection or reselection operation is performed based on the measurement performance of the NCD-SSB, or based on the measurement performance of the NCD-SSB of the second BWP and the measurement performance of the CD-SSB of the first BWP may be restricted because a cycle of the NCD-SSB may be longer than a cycle of the CD-SSB, thereby avoiding impact on performance of the terminal caused by excessively late cell selection or reselection caused by performing cell selection or reselection by using the measurement performance of the NCD-SSB or the measurement performance of the NCD-SSB and the measurement performance of the CD-SSB all the time.

It should be noted that the criterion R for cell reselection is to rank the measurement performance of the neighboring cell, or the measurement performance of the current cell and the measurement performance of the neighboring cell, and select a cell with optimum measurement performance as a target cell. Herein, the measurement performance of the NCD-SSB of the second BWP is used as measurement performance of a corresponding cell.

The criterion S for cell selection and reselection may include: measurement performance of the target cell is greater than a preset threshold 1; or measurement performance of the target cell is greater than a preset threshold 1, and the measurement performance of the current cell is less than a preset threshold 2. The preset threshold 1 and the preset threshold 2 may be determined based on an actual requirement. Herein, the measurement performance of the NCD-S SB of the second BWP is used as the measurement performance of the corresponding cell.

Optionally, before step 32, the terminal may perform the cell selection or reselection operation based on the measurement performance of the CD-SSB of the first BWP, to ensure a cell selection or reselection process.

In this embodiment of this application, during inter-frequency or inter-system cell reselection, the foregoing process of performing the cell selection or reselection operation may include: performing, by the terminal, the cell selection or reselection operation based on the measurement performance of the CD-SSB of the first BWP of the neighboring cell, or the measurement performance of the CD-SSB of the first BWP of the neighboring cell and the measurement performance of the NCD-SSB of the second BWP of the current cell. In this case, during inter-frequency or inter-system cell reselection, the terminal does not need to switch retuning from the second BWP to the first BWP in the current cell, thereby reducing power consumption of the terminal and complexity.

Further, when performing the cell selection or reselection operation based on the measurement performance of the CD-SSB of the first BWP of the neighboring cell, or the measurement performance of the CD-SSB of the first BWP of the neighboring cell and the measurement performance of the NCD-SSB of the second BWP of the current cell, the terminal may reselect the neighboring cell when at least one of the following is met:
(1) the measurement performance of the CD-SSB of the first BWP of the neighboring cell is greater than a first preset threshold; or
(2) the measurement performance of the NCD-SSB of the second BWP of the current cell is less than a second preset threshold.

It should be noted that the foregoing first preset threshold and second preset threshold may be configured by the network side device or agreed upon in a protocol, and may be the same or different. In this case, reselecting a neighboring cell with relatively good channel quality may be ensured.

Further, before reselecting the neighboring cell, the terminal may perform criterion S determining by using cell selection and/or reselection configuration information of the neighboring cell.

Optionally, the neighboring cell may include at least one of the following:
an inter-frequency neighboring cell with a high priority (high priority);
an inter-frequency neighboring cell with a low priority (low priority);
an inter-system neighboring cell with a high priority (high priority); or
an inter-system neighboring cell with a low priority (low priority).

In this embodiment of this application, during intra-frequency cell reselection or inter-frequency/inter-system cell reselection with a same priority, the cell selection or reselection operation may be performed in different manners. Descriptions are as follows.

Optionally, the performing the cell selection or reselection operation may include: performing, by the terminal, a target operation, where the target operation may include at least one of the following: a first operation, a second operation, or a third operation.

Further, that the terminal performs the first operation may include at least one of the following:
(1) the terminal ranks cells based on the measurement performance of the NCD-SSB of the second BWP of the current cell and the measurement performance of the NCD-SSB of the second BWP of the neighboring cell;
(2) the terminal reselects a neighboring cell with a highest ranking, that is, reselects a neighboring cell with an optimum ranking;
(3) before reselecting the neighboring cell, the terminal performs criterion S determining by using cell selection and/or reselection configuration information of the neighboring cell;
(4) before reselecting the neighboring cell, the terminal searches for the neighboring cell on the NCD-SSB of the second BWP; or
(5) before reselecting the neighboring cell, the terminal searches for the neighboring cell on the CD-SSB of the first BWP.

In this case, when performing the first operation, the terminal does not need to switch retuning from the second BWP to the first BWP for measurement of the current cell and measurement of the neighboring cell, thereby reducing power consumption of the terminal and complexity.

Optionally, the foregoing reselecting a neighboring cell with a highest ranking may include: receiving system information on the first BWP of the neighboring cell to successfully access the neighboring cell.

Optionally, when the neighboring cell reselected by the terminal is an intra-frequency neighboring cell, the terminal may perform cell reselection by using first requirement information (requirement) corresponding to inter-frequency cell selection and/or reselection, or by using second requirement information, where the second requirement information is requirement information corresponding to cell selection or reselection performed based on measurement performance of an NCD-SSB. The first requirement information or the second requirement information may be configured by a network side device or agreed upon in a protocol. For example, a reselection operation needs to be completed within a preset time. Such a requirement is different for the intra-frequency neighboring cell and the inter-frequency neighboring cell. In this case, even if the intra-frequency neighboring cell is reselected, because cell reselection is performed by using the measurement performance of the NCD-SSB, it is also necessary to use requirement information corresponding to inter-frequency neighboring cell selection or reselection or newly-defined requirement information corresponding to cell selection or reselection performed based on the measurement performance of the NCD-SSB. In this case, an advantage is as follows: It is ensured that the terminal can have enough time to perform cell selection or reselection based on the measurement performance of the NCD-SSB.

In some embodiments, when performing the first operation, the terminal may first rank the cells based on the measurement performance of the NCD-SSB of the second BWP of the current cell and the measurement performance of the NCD-SSB of the second BWP of the neighboring cell, and then reselect the neighboring cell with the highest ranking. Further, before reselecting the neighboring cell with the highest ranking, the terminal may perform criterion S determining by using the cell selection and/or reselection configuration information of the neighboring cell. Further, before reselecting the neighboring cell with the highest ranking, the terminal may search for the neighboring cell on the NCD-SSB of the second BWP, or search for the neighboring cell on the CD-SSB of the first BWP.

Further, that the terminal performs the second operation may include at least one of the following:
(1) the terminal ranks cells based on the measurement performance of the NCD-SSB of the second BWP of the current cell and the measurement performance of the CD-SSB of the first BWP of the neighboring cell;
(2) the terminal reselects a neighboring cell with a highest ranking, that is, reselects a neighboring cell with an optimum ranking;
(3) before reselecting the neighboring cell, the terminal performs criterion S determining by using cell selection and/or reselection configuration information of the neighboring cell; or
(4) before reselecting the neighboring cell, the terminal searches for the neighboring cell on the CD-SSB of the first BWP.

In this case, when performing the second operation, the terminal does not need to switch retuning from the second BWP to the first BWP in the current cell, thereby reducing power consumption of the terminal and complexity.

Optionally, the foregoing reselecting a neighboring cell with a highest ranking may include: receiving system information on the first BWP of the neighboring cell to successfully access the neighboring cell.

Optionally, when the neighboring cell reselected by the terminal is an intra-frequency neighboring cell, the terminal may perform cell reselection by using first requirement information (requirement) corresponding to inter-frequency cell selection and/or reselection, or by using second requirement information, where the second requirement information is requirement information corresponding to cell selection or reselection performed based on measurement performance of an NCD-SSB. The first requirement information or the second requirement information may be configured by a network side device or agreed upon in a protocol. For example, a reselection operation needs to be completed within a preset time. Such a requirement is different for the intra-frequency neighboring cell and the inter-frequency neighboring cell. In this case, even if the intra-frequency neighboring cell is reselected, because cell reselection is performed by using the measurement performance of the NCD-SSB, it is also necessary to use requirement information corresponding to inter-frequency neighboring cell selection or reselection or the newly-defined requirement information corresponding to cell selection or reselection performed based on the measurement performance of the NCD-SSB. In this case, an advantage is as follows: It is ensured that the terminal can have enough time to perform cell selection or reselection based on the measurement performance of the NCD-SSB.

In some embodiments, when performing the second operation, the terminal may first rank the cells based on the measurement performance of the NCD-SSB of the second BWP of the current cell and the measurement performance of the CD-SSB of the first BWP of the neighboring cell, and then reselect the neighboring cell with the highest ranking. Further, before reselecting the neighboring cell with the highest ranking, the terminal may perform criterion S determining by using the cell selection and/or reselection configuration information of the neighboring cell. Further, before reselecting the neighboring cell with the highest ranking, the terminal may search for the neighboring cell on the CD-SSB of the first BWP.

Further, that the terminal performs the third operation may include at least one of the following:
(1) the terminal searches for the neighboring cell on the CD-SSB of the first BWP;
(2) the terminal ranks cells based on the measurement performance of the NCD-SSB of the second BWP of the current cell and the measurement performance of the NCD-SSB of the second BWP of the neighboring cell;
(3) the terminal reselects a neighboring cell with a highest ranking, that is, reselects a neighboring cell with an optimum ranking; or
(4) before reselecting the neighboring cell, the terminal performs criterion S determining by using cell selection and/or reselection configuration information of the neighboring cell.

In this case, when performing the third operation, the terminal does not need to switch retuning from the second BWP to the first BWP for measurement of the current cell and measurement of the neighboring cell, thereby reducing power consumption of the terminal and complexity.

Optionally, the foregoing reselecting a neighboring cell with a highest ranking may include: receiving system information on the first BWP of the neighboring cell to successfully access the neighboring cell.

Optionally, when the neighboring cell reselected by the terminal is an intra-frequency neighboring cell, the terminal may perform cell reselection by using first requirement information (requirement) corresponding to inter-frequency cell selection and/or reselection, or by using second requirement information, where the second requirement information is requirement information corresponding to cell selection or reselection performed based on measurement performance of an NCD-SSB. The first requirement information or the second requirement information may be configured by a network side device or agreed in a protocol. For example, a reselection operation needs to be completed within a preset time. Such a requirement is different for the intra-frequency neighboring cell and the inter-frequency neighboring cell. In this case, even if the intra-frequency neighboring cell is reselected, because cell reselection is performed by using the measurement performance of the NCD-SSB, it is also necessary to use requirement information corresponding to inter-frequency neighboring cell selection or reselection or the newly-defined requirement information corresponding to cell selection or reselection performed based on the measurement performance of the NCD-SSB. In this case, an advantage is as follows: It is ensured that the terminal can have enough time to perform cell selection or reselection based on the measurement performance of the NCD-SSB.

In some embodiments, when performing the third operation, the terminal may first search for the neighboring cell on the CD-SSB of the first BWP, rank the cells based on the measurement performance of the NCD-SSB of the second BWP of the current cell and the measurement performance of the NCD-SSB of the second BWP of the neighboring cell, and then reselect the neighboring cell with the highest ranking. Further, before reselecting the neighboring cell with the highest ranking, the terminal may perform criterion S determining by using the cell selection and/or reselection configuration information of the neighboring cell.

Optionally, the terminal may select different cell selection or reselection methods based on different conditions. The performing a target operation may include any one of the following:
when a second condition is met, performing, by the terminal, the second operation to perform cell selection or reselection; and
when a third condition is met, performing, by the terminal, any one of the first operation, the second operation, and the third operation, to perform cell selection or reselection.

The second condition includes at least one of the following:
the measurement performance of the current cell is less than or equal to a third preset threshold; in this case, the terminal is on an edge of the cell, and the measurement performance of the neighboring cell needs to be based on the measurement performance of the CD-SSB of the first BWP; and therefore, the second operation is performed to perform cell selection or reselection, to ensure accuracy of cell selection or reselection;
the current cell does not meet the S-measure condition, for example, the being not meet the S-measure condition may be: the measurement performance of the current cell is less than or equal to a preset threshold; in this case, the terminal is on an edge of the cell, and the measurement performance of the neighboring cell needs to be based on the measurement performance of the CD-SSB of the first BWP; and therefore, the second operation is performed to perform cell selection or reselection, to ensure accuracy of cell selection and reselection;
no NCD-SSB is configured in some or all of neighboring cells; in this case, because no NCD-SSB is configured in some or all of the neighboring cells, the measurement performance of the neighboring cell needs to be based on the measurement performance of the CD-SSB of the first BWP; and therefore, the second operation is performed to perform cell selection or reselection, to ensure accuracy of cell selection and reselection; or
some or all of neighboring cells do not support the NCD-SSB; in this case, because some or all of the neighboring cells do not support the NCD-SSB, the measurement performance of the neighboring cell needs to be based on the measurement performance of the CD-SSB of the first BWP; and therefore, the second operation is performed to perform cell selection or reselection, to ensure accuracy of cell selection and reselection.

The third condition includes at least one of the following:
the measurement performance of the current cell is greater than or equal to a fourth preset threshold; in this case, the terminal is in a center of the cell, and by performing any one of the first operation, the second operation, and the third operation, complexity and power consumption of the terminal can be reduced, to prevent the terminal from being frequently switched between the second BWP and the first BWP;
the current cell meets the S-measure condition; for example, meeting the S-measure condition may be: the measurement performance of the current cell is greater than or equal to a preset threshold; in this case, the terminal is in a center of the cell, and by performing any one of the first operation, the second operation, and the third operation, complexity and power consumption of the terminal can be reduced, to prevent the terminal from being frequently switched between the second BWP and the first BWP;
the NCD-SSB is configured in some or all of neighboring cells; and in this case, to reduce complexity and power consumption of the terminal and prevent the terminal from being frequently switched between the second BWP and the first BWP, any one of the first operation, the second operation, and the third operation may be performed to perform cell selection or reselection; or
some or all of neighboring cells support the NCD-SSB; and in this case, to reduce complexity and power consumption of the terminal and prevent the terminal from being frequently switched between the second BWP and the first BWP, any one of the first operation, the second operation, and the third operation may be performed to perform cell selection or reselection.

It should be noted that the foregoing third preset threshold and fourth preset threshold may be configured by the network side device or agreed upon in a protocol, and may be the same or different.

Optionally, when the second condition is met, the terminal may further perform a fourth operation to perform cell selection or reselection. The fourth operation may include at least one of the following:
(1) the terminal ranks cells based on measurement performance of a CD-SSB of a first BWP of the current cell and measurement performance of a CD-SSB of a first BWP of the neighboring cell;
(2) the terminal reselects a neighboring cell with a highest ranking, that is, reselects a neighboring cell with an optimum ranking;
(3) before reselecting the neighboring cell, the terminal performs criterion S determining by using cell selection and/or reselection configuration information of the neighboring cell; or
(4) before reselecting the neighboring cell, the terminal searches for the neighboring cell on the CD-SSB of the first BWP of the current cell and/or the neighboring cell.

Optionally, the foregoing reselecting a neighboring cell with a highest ranking may include: receiving system information on the first BWP of the neighboring cell to successfully access the neighboring cell.

In some embodiments, when performing the fourth operation, the terminal may first rank the cells based on the measurement performance of the CD-SSB of the first BWP of the current cell and the measurement performance of the CD-SSB of the first BWP of the neighboring cell, and then reselect the neighboring cell with the highest ranking. Further, before reselecting the neighboring cell with the highest ranking, the terminal may perform criterion S determining by using the cell selection and/or reselection configuration information of the neighboring cell. Further, before reselecting the neighboring cell with the highest ranking, the terminal may search for the neighboring cell on the CD-SSB of the first BWP.

The cell selection or reselection method provided in this embodiment of this application may be executed by a cell selection or reselection apparatus. In this embodiment of this application, the cell selection or reselection apparatus provided in an embodiment of this application is described by using an example in which the cell selection or reselection apparatus executes the cell selection or reselection method.

FIG. 4 is a schematic diagram of a structure of a cell selection or reselection apparatus according to an embodiment of this application. The apparatus is applied to a terminal. As shown in FIG. 4, the cell selection or reselection apparatus 40 includes:
an obtaining module 41, configured to obtain measurement performance of a first object; and
an execution module 42, configured to perform a cell selection or reselection operation based on the measurement performance of the first object, where
the first object includes any one of the following: an NCD-SSB of a second BWP; and the NCD-SSB of the second BWP and a CD-SSB of a first BWP; and
the first BWP is a BWP including the CD-SSB, and the second BWP is a BWP including the NCD-SSB.

Optionally, the execution module 42 is specifically configured to: when the terminal receives network indication information or meets a first condition, perform the cell selection or reselection operation based on the measurement performance of the first object, where
the network indication information is used to indicate any one of the following:
performing the cell selection or reselection operation based on measurement performance of the NCD-SSB of the second BWP;
performing the cell selection or reselection operation based on the measurement performance of the NCD-SSB of the second BWP and measurement performance of the CD-SSB of the first BWP;
a criterion R for cell selection or reselection by the terminal based on the measurement performance of the NCD-SSB of the second BWP;
a criterion S for cell selection or reselection by the terminal based on the measurement performance of the NCD-SSB of the second BWP; and
meeting the first condition, where
the first condition includes at least one of the following:
   the terminal performs at least one of the following on a second BWP of a current cell: receiving system information SI, receiving a paging message, monitoring an advance indication signal, performing random access, or cell camping;
   an NCD-SSB is configured in a current cell;
   an NCD-SSB is configured in a neighboring cell;
   a random access related configuration is configured on a second BWP of a current cell and/or a neighboring cell; or
   an S-measure condition is met, where
   cell measurement performance is determined based on the measurement performance of the NCD-SSB of the second BWP, the measurement performance of the NCD-SSB of the second BWP can represent cell measurement performance, or the measurement performance of the NCD-SSB of the second BWP can replace the measurement performance of the CD-SSB of the first BWP.

Optionally, the execution module 42 is further configured to perform the cell selection or reselection operation based on measurement performance of the CD-SSB of the first BWP.

Optionally, the execution module 42 is configured to perform at least one of the following:
performing the cell selection or reselection operation based on measurement performance of a CD-SSB of a first BWP of a neighboring cell, or measurement performance of a CD-SSB of a first BWP of a neighboring cell and measurement performance of an NCD-SSB of a second BWP of a current cell; or
performing the cell selection or reselection operation based on measurement performance of an NCD-SSB of a second BWP of a current cell and measurement performance of a target SSB of a neighboring cell, where the target SSB includes at least one of the following: the CD-SSB of the first BWP or the NCD-SSB of the second BWP.

Optionally, the execution module 42 is configured to reselect the neighboring cell when at least one of the following is met:
the measurement performance of the CD-SSB of the first BWP of the neighboring cell is greater than a first preset threshold; or
the measurement performance of the NCD-SSB of the second BWP of the current cell is less than a second preset threshold.

Optionally, the execution module 42 is further configured to: before reselecting the neighboring cell, perform criterion S determining by using cell selection and/or reselection configuration information of the neighboring cell.

Optionally, the neighboring cell includes at least one of the following:
an inter-frequency neighboring cell with a high priority;
an inter-frequency neighboring cell with a low priority;
an inter-system neighboring cell with a high priority; or
an inter-system neighboring cell with a low priority.

Optionally, the execution module 42 is specifically configured to perform a target operation, where the target operation includes at least one of the following: a first operation, a second operation, or a third operation, where
the first operation includes at least one of the following:
ranking cells based on the measurement performance of the NCD-S SB of the second BWP of the current cell and the measurement performance of the NCD-SSB of the second BWP of the neighboring cell;
reselecting a neighboring cell with a highest ranking;
before reselecting the neighboring cell, performing criterion S determining by using cell selection and/or reselection configuration information of the neighboring cell;
before reselecting the neighboring cell, searching for the neighboring cell on the NCD-SSB of the second BWP; or
before reselecting the neighboring cell, searching for the neighboring cell on the CD-SSB of the first BWP;
the second operation includes at least one of the following:
   ranking cells based on the measurement performance of the NCD-S SB of the second BWP of the current cell and the measurement performance of the CD-SSB of the first BWP of the neighboring cell;
   reselecting a neighboring cell with a highest ranking;
   before reselecting the neighboring cell, performing criterion S determining by using cell selection and/or reselection configuration information of the neighboring cell; or
   before reselecting the neighboring cell, searching for the neighboring cell on the CD-SSB of the first BWP; or
   the third operation includes at least one of the following:
      searching for the neighboring cell on the CD-SSB of the first BWP;
      ranking cells based on the measurement performance of the NCD-S SB of the second BWP of the current cell and measurement performance of an NCD-SSB of a second BWP of the neighboring cell;
      reselecting a neighboring cell with a highest ranking; or
      before reselecting the neighboring cell, performing criterion S determining by using cell selection and/or reselection configuration information of the neighboring cell.

Optionally, the reselecting a neighboring cell with a highest ranking includes: receiving system information on the first BWP of the neighboring cell.

Optionally, the execution module 42 is specifically configured to: when the neighboring cell reselected by the terminal is an intra-frequency neighboring cell, perform cell reselection by using first requirement information corresponding to inter-frequency cell selection and/or reselection, or by using second requirement information, where the second requirement information is requirement information corresponding to cell selection or reselection based on measurement performance of an NCD-SSB.

Optionally, the execution module 42 is specifically configured to perform any one of the following:
when a second condition is met, performing the second operation to perform cell selection or reselection; and
when a third condition is met, performing any one of the first operation, the second operation, and the third operation, to perform cell selection or reselection, where
the second condition includes at least one of the following:
   measurement performance of the current cell is less than or equal to a third preset threshold;
   the current cell does not meet an S-measure condition;
   no NCD-SSB is configured in some or all of neighboring cells; or
   some or all of neighboring cells do not support the NCD-SSB; or
   the third condition includes at least one of the following:
      measurement performance of the current cell is greater than or equal to a fourth preset threshold;
      the current cell meets an S-measure condition;
      the NCD-SSB is configured in some or all of neighboring cells; or
      some or all of neighboring cells support the NCD-SSB.

Optionally, the execution module 42 is further configured to: when a second condition is met, perform a fourth operation to perform cell selection or reselection, where the second condition includes at least one of the following:
measurement performance of a current cell is less than or equal to a third preset threshold;
the current cell does not meet an S-measure condition;
no NCD-SSB is configured in some or all of neighboring cells; or
some or all of neighboring cells do not support the NCD-SSB; and
the fourth operation includes at least one of the following:
   ranking cells based on measurement performance of a CD-SSB of a first BWP of the current cell and measurement performance of a CD-SSB of a first BWP of the neighboring cell;
   reselecting a neighboring cell with a highest ranking;
   before reselecting the neighboring cell, performing criterion S determining by using cell selection and/or reselection configuration information of the neighboring cell; or
   before reselecting the neighboring cell, searching for the neighboring cell on the CD-SSB of the first BWP of the current cell and/or the neighboring cell.

Optionally, a physical broadcast channel PBCH corresponding to the CD-SSB includes relevant configuration information indicating reception of system information, and/or a transmission frequency location of the CD-SSB is at a frequency location corresponding to a synchronization signal raster sync raster; and/or
a PBCH corresponding to the NCD-SSB does not include relevant configuration information indicating reception of system information, and/or a transmission frequency location of the NCD-SSB is not at a frequency location corresponding to a sync raster.

Optionally, the cell selection or reselection apparatus 40 further includes:
a receiving module, configured to receive relevant configuration information of the NCD-SSB of the second BWP from a network side device.

Optionally, the obtaining module 41 is specifically configured to perform measurement based on the relevant configuration information, to obtain the measurement performance of the first object.

The cell selection or reselection apparatus 40 in this embodiment of this application may be an electronic device, for example, an electronic device with an operating system, or may be a component in an electronic device, such as an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The cell selection or reselection apparatus 40 provided in this embodiment of this application can implement the processes implemented in the method embodiment in FIG. 3 and a same technical effect is achieved. To avoid repetition, details are not described herein again.

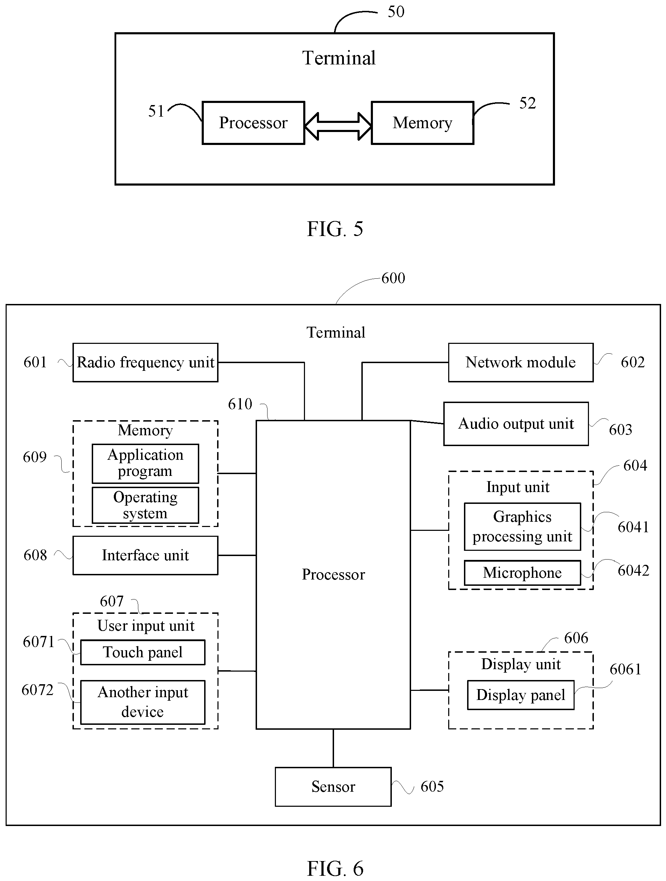

Optionally, as shown in FIG. 5, an embodiment of this application further provides a terminal 50, including a processor 51 and a memory 52. A program or an instruction executable by the processor 51 is stored in the memory 52. When the program or the instruction is executed by the processor 51, the steps of the embodiment of the foregoing cell selection or reselection method are implemented, and a same technical effect can be achieved. To avoid repetition, details are not described herein again.

An embodiment of this application further provides a terminal, including a processor and a communication interface, where the processor is configured to: obtain measurement performance of a first object; and perform a cell selection or reselection operation based on the measurement performance of the first object, where the first object includes any one of the following: an NCD-SSB of a second BWP; and the NCD-SSB of the second BWP and a CD-SSB of a first BWP; and the first BWP is a BWP including the CD-SSB, and the second BWP is a BWP including the NCD-SSB. The terminal embodiment corresponds to the terminal side method embodiment, each implementation process and implementation of the method embodiment can be applied to the terminal embodiment, and a same technical effect can be achieved.

Specifically, FIG. 6 is a schematic diagram of a hardware structure of a terminal according to an embodiment of this application.

The terminal 600 includes but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the terminal 600 may further include a power supply (such as a battery) that supplies power to each component. The power supply may be logically connected to the processor 610 by using a power supply management system, to implement functions such as charging and discharging management, and power consumption management by using the power supply management system. The terminal structure shown in FIG. 6 constitutes no limitation on the terminal, and the terminal may include more or fewer components than those shown in the figure, or combine some components, or have different component arrangements. Details are not described herein.

It should be understood that in this embodiment of this application, the input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 601 may send the downlink data to the processor 610 for processing. In addition, the radio frequency unit 601 may send uplink data to the network side device. Usually, the radio frequency unit 601 includes but is not limited to an antenna, an amplifier, a transceiver, a coupler, a low noise amplifier, a duplexer, and the like.

The memory 609 may be configured to store a software program or an instruction and various data. The memory 609 may mainly include a first storage area for storing a program or an instruction and a second storage area for storing data. The first storage area may store an operating system, and an application program or an instruction required by at least one function (for example, a sound playing function or an image playing function). In addition, the memory 609 may be a volatile memory or a non-volatile memory, or the memory 609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 609 in this embodiment of this application includes but is not limited to these memories and any memory of another proper type.

The processor 610 may include one or more processing units. Optionally, an application processor and a modem processor are integrated into the processor 610. The application processor mainly processes an operating system, a user interface, an application program, or the like. The modem processor mainly processes a wireless communication signal, for example, a baseband processor. It may be understood that, alternatively, the modem processor may not be integrated into the processor 610.

The processor 610 is configured to: obtain measurement performance of a first object; and perform a cell selection or reselection operation based on the measurement performance of the first object, where the first object includes any one of the following: an NCD-SSB of a second BWP; and the NCD-SSB of the second BWP and a CD-SSB of a first BWP; and the first BWP is a BWP including the CD-SSB, and the second BWP is a BWP including the NCD-SSB.

The terminal 600 provided in this embodiment of this application can implement the processes implemented in the method embodiment in FIG. 3, and a same technical effect is achieved. To avoid repetition, details are not described herein again.

An embodiment of this application further provides a readable storage medium. The readable storage medium stores a program or an instruction. When the program or the instruction is executed by a processor, the processes of the embodiment of the foregoing cell selection or reselection method are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the embodiment of the foregoing cell selection or reselection method, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program product. The computer program product is stored in a storage medium, and the computer program product is executed by at least one processor to implement the processes of the embodiment of the foregoing cell selection or reselection method, and a same technical effect can be achieved. To avoid repetition, details are not described herein again.

An embodiment of this application further provides a communication system, including a terminal and a network side device, where the terminal may be configured to perform the steps of the foregoing cell selection or reselection method, and the network side device may be configured to send relevant configuration information of an NCD-SSB of a second BWP to the terminal, so that the terminal performs corresponding measurement.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the conventional technology may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A cell selection or reselection method, comprising:
obtaining, by a terminal, measurement performance of a first object; and
performing, by the terminal, a cell selection or reselection operation based on the measurement performance of the first object, wherein
the first object comprises any one of the following: a non-cell defining synchronization signal and PBCH block NCD-SSB of a second bandwidth part BWP; and the NCD-SSB of the second BWP and a cell defining synchronization signal and PBCH block CD-SSB of a first BWP; and
the first BWP is a BWP comprising the CD-SSB, and the second BWP is a BWP comprising the NCD-SSB.

2. The method according to claim 1, wherein the performing a cell selection or reselection operation based on the measurement performance of the first object comprises:
when the terminal receives network indication information or meets a first condition, performing, by the terminal, the cell selection or reselection operation based on the measurement performance of the first object, wherein
the network indication information is used to indicate any one of the following:
performing the cell selection or reselection operation based on measurement performance of the NCD-SSB of the second BWP;
performing the cell selection or reselection operation based on the measurement performance of the NCD-SSB of the second BWP and measurement performance of the CD-SSB of the first BWP;
a criterion R for cell selection or reselection by the terminal based on the measurement performance of the NCD-SSB of the second BWP;
a criterion S for cell selection or reselection by the terminal based on the measurement performance of the NCD-SSB of the second BWP; and
meeting the first condition, wherein
the first condition comprises at least one of the following:
the terminal performs at least one of the following on a second BWP of a current cell: receiving system information SI, receiving a paging message, monitoring an advance indication signal, performing random access, or cell camping;
an NCD-SSB is configured in a current cell;
an NCD-SSB is configured in a neighboring cell;
a random access related configuration is configured on a second BWP of a current cell and/or a neighboring cell; or
an S-measure condition is met, wherein
cell measurement performance is determined based on the measurement performance of the NCD-SSB of the second BWP, the measurement performance of the NCD-SSB of the second BWP can represent cell measurement performance, or the measurement performance of the NCD-SSB of the second BWP can replace the measurement performance of the CD-SSB of the first BWP.

3. The method according to claim 1, wherein before the performing a cell selection or reselection operation based on the measurement performance of the first object, the method further comprises:
performing, by the terminal, the cell selection or reselection operation based on measurement performance of the CD-SSB of the first BWP.

4. The method according to claim 1, wherein the performing a cell selection or reselection operation based on the measurement performance of the first object comprises at least one of the following:
performing, by the terminal, the cell selection or reselection operation based on measurement performance of a CD-SSB of a first BWP of a neighboring cell, or measurement performance of a CD-SSB of a first BWP of a neighboring cell and measurement performance of an NCD-SSB of a second BWP of a current cell; or
performing, by the terminal, the cell selection or reselection operation based on measurement performance of an NCD-SSB of a second BWP of a current cell and measurement performance of a target SSB of a neighboring cell, wherein the target SSB comprises at least one of the following: the CD-SSB of the first BWP or the NCD-SSB of the second BWP.

5. The method according to claim 4, wherein the performing, by the terminal, the cell selection or reselection operation based on measurement performance of a CD-SSB of a first BWP of a neighboring cell, or measurement performance of a CD-SSB of a first BWP of a neighboring cell and measurement performance of an NCD-SSB of a second BWP of a current cell comprises:
reselecting, by the terminal, the neighboring cell when at least one of the following is met:
the measurement performance of the CD-SSB of the first BWP of the neighboring cell is greater than a first preset threshold; or
the measurement performance of the NCD-SSB of the second BWP of the current cell is less than a second preset threshold.

6. The method according to claim 5, wherein before the reselecting the neighboring cell, the method further comprises:
performing, by the terminal, criterion S determining by using cell selection and/or reselection configuration information of the neighboring cell.

7. The method according to claim 5 or 6, wherein the neighboring cell comprises at least one of the following:
an inter-frequency neighboring cell with a high priority;
an inter-frequency neighboring cell with a low priority;
an inter-system neighboring cell with a high priority; or
an inter-system neighboring cell with a low priority.

8. The method according to claim 4, wherein the performing the cell selection or reselection operation based on measurement performance of an NCD-SSB of a second BWP of a current cell and measurement performance of a target SSB of a neighboring cell comprises:
performing, by the terminal, a target operation, wherein
the target operation comprises at least one of the following: a first operation, a second operation, or a third operation, wherein
the first operation comprises at least one of the following:
ranking cells based on the measurement performance of the NCD-SSB of the second BWP of the current cell and measurement performance of an NCD-SSB of a second BWP of the neighboring cell;
reselecting a neighboring cell with a highest ranking;
before reselecting the neighboring cell, performing criterion S determining by using cell selection and/or reselection configuration information of the neighboring cell;
before reselecting the neighboring cell, searching for the neighboring cell on the NCD-SSB of the second BWP; or
before reselecting the neighboring cell, searching for the neighboring cell on the CD-SSB of the first BWP;
the second operation comprises at least one of the following:
ranking cells based on the measurement performance of the NCD-SSB of the second BWP of the current cell and the measurement performance of the CD-SSB of the first BWP of the neighboring cell;
reselecting a neighboring cell with a highest ranking;
before reselecting the neighboring cell, performing criterion S determining by using cell selection and/or reselection configuration information of the neighboring cell; or
before reselecting the neighboring cell, searching for the neighboring cell on the CD-SSB of the first BWP; or
the third operation comprises at least one of the following:
searching for the neighboring cell on the CD-SSB of the first BWP;
ranking cells based on the measurement performance of the NCD-SSB of the second BWP of the current cell and measurement performance of an NCD-SSB of a second BWP of the neighboring cell;
reselecting a neighboring cell with a highest ranking; or
before reselecting the neighboring cell, performing criterion S determining by using cell selection and/or reselection configuration information of the neighboring cell.

9. The method according to claim 8, before the reselecting a neighboring cell with a highest ranking, comprising:
receiving, by the terminal, system information on the first BWP of the neighboring cell.

10. The method according to claim 8, wherein the performing a target operation comprises:
when the neighboring cell reselected by the terminal is an intra-frequency neighboring cell, performing, by the terminal, cell reselection by using first requirement information corresponding to inter-frequency cell selection and/or reselection, or by using second requirement information, wherein the second requirement information is requirement information corresponding to cell selection or reselection based on measurement performance of an NCD-SSB.

11. The method according to claim 8, wherein the performing a target operation comprises any one of the following:
when a second condition is met, performing, by the terminal, the second operation to perform cell selection or reselection; and
when a third condition is met, performing, by the terminal, any one of the first operation, the second operation, and the third operation, to perform cell selection or reselection, wherein
the second condition comprises at least one of the following:
measurement performance of the current cell is less than or equal to a third preset threshold;
the current cell does not meet an S-measure condition;
no NCD-SSB is configured in some or all of neighboring cells; or
some or all of neighboring cells do not support the NCD-SSB; or
the third condition comprises at least one of the following:
measurement performance of the current cell is greater than or equal to a fourth preset threshold;
the current cell meets an S-measure condition;
the NCD-SSB is configured in some or all of neighboring cells; or
some or all of neighboring cells support the NCD-SSB.

12. The method according to claim 1, wherein the method further comprises:
when a second condition is met, performing, by the terminal, a fourth operation to perform cell selection or reselection, wherein the second condition comprises at least one of the following:
measurement performance of a current cell is less than or equal to a third preset threshold;
a current cell does not meet an S-measure condition;
no NCD-SSB is configured in some or all of neighboring cells; or
some or all of neighboring cells do not support the NCD-SSB; and
the fourth operation comprises at least one of the following:
ranking cells based on measurement performance of a CD-SSB of a first BWP of the current cell and measurement performance of a CD-SSB of a first BWP of a neighboring cell;
reselecting a neighboring cell with a highest ranking;
before reselecting the neighboring cell, performing criterion S determining by using cell selection and/or reselection configuration information of the neighboring cell; or
before reselecting the neighboring cell, searching for the neighboring cell on the CD-SSB of the first BWP of the current cell and/or the neighboring cell.

13. The method according to any one of claims 1 to 12, wherein a physical broadcast channel PBCH corresponding to the CD-SSB comprises relevant configuration information indicating reception of system information, and/or a transmission frequency location of the CD-SSB is at a frequency location corresponding to a synchronization signal raster sync raster; and/or
a PBCH corresponding to the NCD-SSB does not comprise relevant configuration information indicating reception of system information, and/or a transmission frequency location of the NCD-SSB is not at a frequency location corresponding to a sync raster.

14. The method according to any one of claims 1 to 12, wherein before the obtaining measurement performance of a first object, the method further comprises:
receiving, by the terminal, relevant configuration information of the NCD-SSB of the second BWP from a network side device.

15. The method according to claim 14, wherein the obtaining measurement performance of a first object comprises:
performing, by the terminal, measurement based on the relevant configuration information, to obtain the measurement performance of the first object.

16. A cell selection or reselection apparatus, comprising:
an obtaining module, configured to obtain measurement performance of a first object; and
an execution module, configured to perform a cell selection or reselection operation based on the measurement performance of the first object, wherein
the first object comprises any one of the following: an NCD-SSB of a second BWP; and the NCD-SSB of the second BWP and a CD-SSB of a first BWP; and
the first BWP is a BWP comprising the CD-SSB, and the second BWP is a BWP comprising the NCD-SSB.

17. A terminal, comprising: a processor and a memory, wherein the memory stores a program or an instruction executable by the processor, and when the program or the instruction is executed by the processor, the steps of the cell selection or reselection method according to any one of claims 1 to 15 are implemented.

18. A readable storage medium, wherein the readable storage medium stores a program or an instruction, and when the program or the instruction is executed by a processor, the cell selection or reselection method according to any one of claims 1 to 15 is implemented.

19. A chip, comprising a processor and a communication interface, wherein the communication interface is coupled to the processor, and the processor is configured to run a program or an instruction, to implement the steps of the cell selection or reselection method according to any one of claims 1 to 15.

20. A computer program product, wherein the computer program product is stored in a storage medium, and the computer program product is executed by at least one processor to implement the steps of the cell selection or reselection method according to any one of claims 1 to 15.

21. A communication device, configured to perform the steps of the cell selection or reselection method according to any one of claims 1 to 15.
